# EUROPEAN PATENT SPECIFICATION

(11) **EP 2 095 750 B1**
(45) Date of publication and mention of the grant of the patent: **01.06.2011**
(21) Application number: 08171907.2
(22) Date of filing: 17.12.2008
(51) Int. Cl.: A47J 37/12

(54) **Apparatus for cooking food with energy recovery**
Vorrichtung zum Garen von Lebensmitteln mit Energierückgewinnung
Appareil de cuisson d'aliment avec récupération d'énergie

(30) Priority: 20.12.2007 IT MO20070401
(43) Date of publication of application: 02.09.2009
(73) Proprietor: Angelo Po Grandi Cucine-Societa'per Azioni, 41012 Carpi (MO) (IT)
(72) Inventor: Marenco, Guido Marco Maria, 41100, Modena (IT); Soavi, Alessandro, 41030, Bomporto (MO) (IT)
(74) Representative: Crugnola, Pietro

(56) References cited:
- EP-A- 0 919 173
- EP-A- 1 325 699
- WO-A-94/01031
- DE-A1- 2 063 336
- ES-A2- 2 054 564
- US-A- 5 209 218
- US-B1- 6 217 923

## Description

The present invention relates to a food-cooking apparatus supplied by gas with energy recovery, in particular a cooking apparatus for public catering.

In the field of apparatuses for cooking food, the need is increasingly felt to recover thermal energy that is otherwise dispersed in the environment, or, alternatively to increase the energy efficiency of apparatuses, and, in particular, of gas apparatuses intended for public catering, a sector in which design aspects have until now always concentrated on performance rather than on energy saving.

In known prior-art gas cooking apparatuses for public catering, an important part of thermal energy, produced by the combustion of gas by appropriate burners and used for heating vessels containing food to be cooked (pasta makers, fryers, braziers, etc) is dispersed in the environment through the fumes produced by the combustion of the gas, with no possibility of recovery. In order to give an idea of how much heat is dispersed, in known apparatuses the fumes produced by the combustion of the gas are discharged at a temperature of the order of approximately 300°C, so that it is clear that a significant quantity of thermal energy is dispersed through the fumes.

W09401031 and US 5209218 discloses an apparatus for cooking foods comprising a gas burner associated with a combustion chamber in which the combustion of said gas occurs, containing means containing a food-cooking liquid, said containing means being in thermal contact with said combustion chamber, flue means for evacuating from said combustion chamber fumes produced by the combustion of said gas and heat exchanging means suitable for transferring heat to said food-cooking liquid.

The present invention aims to provide an apparatus supplied with gas for cooking food that is in particular intended for public catering, that enables a consistent part of the thermal energy to be recovered that would otherwise bedispersed, of the fumes produced by the combustion of the gas. Further, the present invention alternatively aims to provide an apparatus that has high energetic efficiency, enabling fuel consumption to be reduced for the same performance compared with known prior-art apparatuses. According to the present invention, an apparatus is provided for cooking food comprising:
- at least a gas burner associated with a combustion chamber in which the combustion of said gas occurs;
- containing means containing a food-cooking liquid, said containing means being in thermal contact with said combustion chamber;
- flue means for evacuating from said combustion chamber fumes produced by the combustion of said gas;
- heat-exchanging means in which an operating fluid circulates, said heat-exchanging means being suitable for transferring heat from said fumts to said operating fluid;
   characterized in that said heat-exchanging means is connected to a thermal energy accumulating device.

Owing to the invention, it is possible to recover a significant quantity of heat from the fumes produced by the combustion of the gas before they are discharged outside or from the combustion chamber, and to transfer said heat to an operating fluid to generate hot water, or, alternatively, the cooking liquid, for example cold water coming from the mains water supply, which enables a significant energy saving to be made.

The invention is disclosed below by way of non-limiting example, with reference to the attached drawings, in which:
Figure 1 is a perspective view of a first embodiment of an apparatus for cooking food according to the present invention;
Figure 2 is a front view of the upper part of the apparatus in Figure 1;
Figure 3 is a section view of the apparatus in Figure 1 in a configuration in which the heat exchanger is connected to a boiler for producing hot water;
Figure 4 is a section view of the apparatus in Figure 1 in a configuration in which the heat exchanger is connected to the mains water supply to heat the cold water coming therefrom before it reaches the cooking vessel;
Figure 5 is a section view of the apparatus in Figure 1 also, however, provided with heat-exchanging means near the combustion chamber, which heat-exchanging means is connected to the boiler;
Figure 6 is a section view of the apparatus in Figure 1, also, however, having heat-exchanging means near the combustion chamber, which heat-exchanging means is connected to the mains water supply.
Figure 7 is a partially fragmentary perspective view of a second embodiment of an apparatus for cooking food according to the present invention.
Figure 8 is a section view of the apparatus in Figure 7 having the heat-exchanging means connected to the boiler;
Figure 9 is a section view of the apparatus in Figure 7 having the heat-exchanging means connected to the mains water supply.

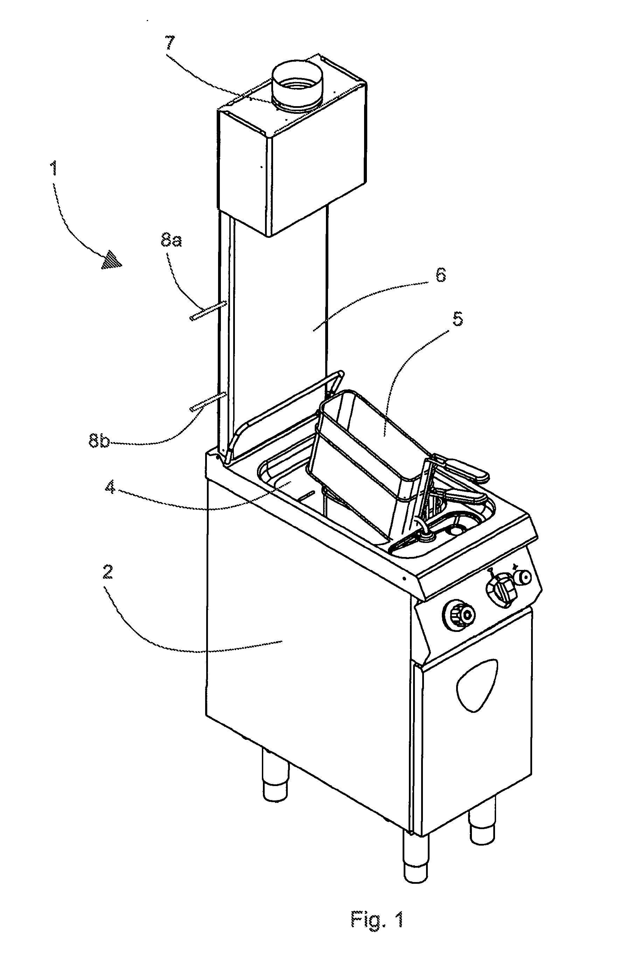

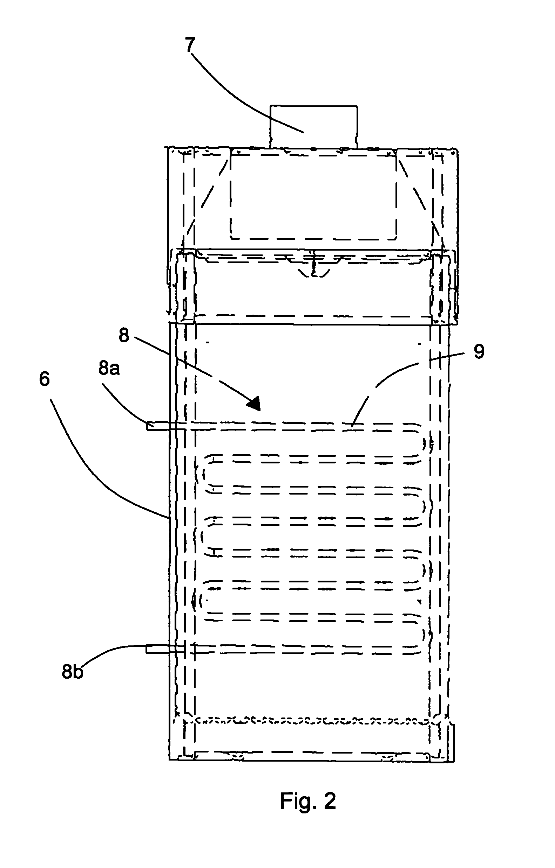

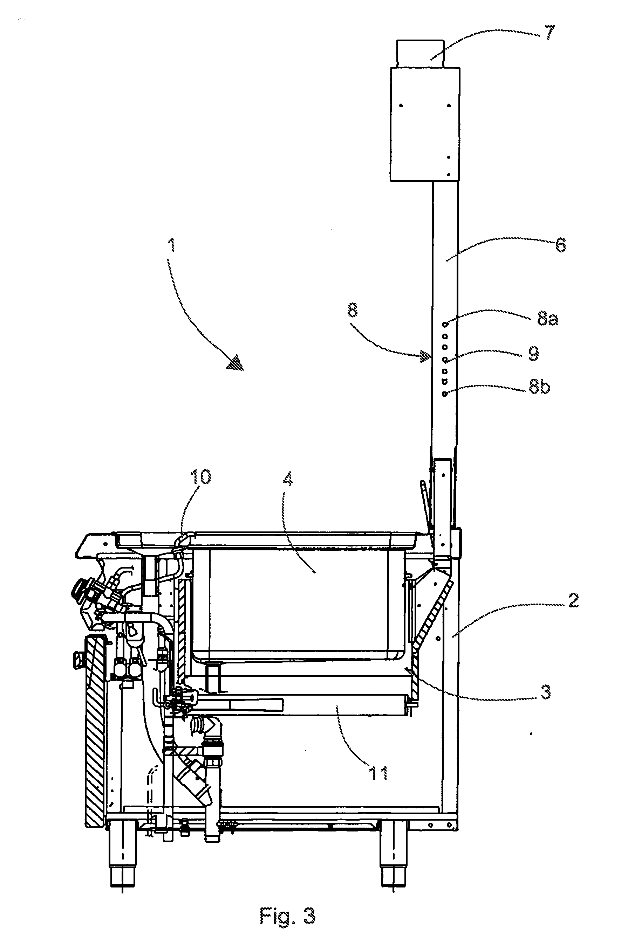

In Figures 1 to 3, there is shown a first embodiment of an apparatus 1 for cooking food according to the invention, that comprises a body 2 in which a combustion chamber 3 and a container 4 are obtained in which a liquid is contained for cooking food, for example water or oil, the apparatus can be further provided with baskets 5 intended for containing food to be immersed into the cooking liquid.

The combustion chamber 3 is supplied by a gas burner 11 that delivers a gaseous fuel to the combustion chamber 3 and causes the combustion thereof.

The fumes produced by the combustion of the fuel delivered to the combustion chamber 3 are evacuated through a flue 6 that conveys the fumes to a fume flue 7.

With the flue 6 a heat exchanger 8 is associated that has an inlet 8a, or 8b and an outlet 8b, or 8a, in which an operating fluid, for example water or oil, is circulated that transfers the heat, which is otherwise dispersed, of the combustion fumes, to a suitable thermal energy accumulating device, for example a boiler, that dispenses hot water as needed,.

The heat exchanger 8 may, for example, consist of one or more tubular elements 9 in the form of a coil, with smooth or corrugated surfaces to increase the heat-exchanging surface.

The heat exchanger 8, can be of the parallel-flow type, with the cooking liquid entering from the inlet 8b and exiting from the outlet 8a, or be of the counterflow type, with the cooking liquid entering from the inlet 8a and exiting from the outlet 8b.

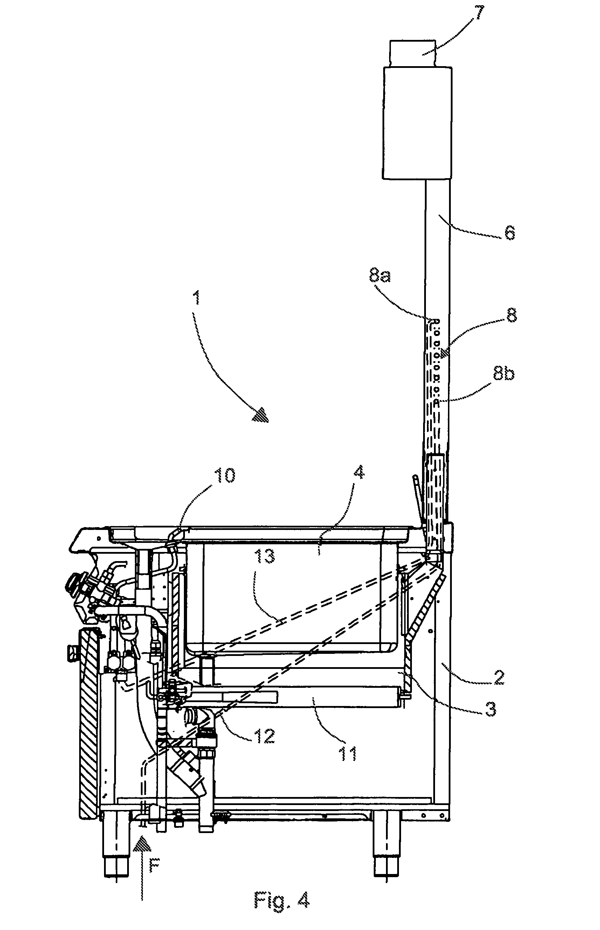

Figure 4 shows a first version of the cooking apparatus 1 illustrated in Figures 1 to 3, in which in the heat-exchanging means 8 the cooking fluid circulates that is then delivered hot inside the vessel 4 without, however, any recirculating occurring. If the cooking fluid is water, as, for example, in a pasta maker, the inlet 8a, or 8b, of the heat exchanger 8 is connected to a mains water supply, shown schematically by the arrow F, by means of a first conduit 12, whilst the outlet 8b, or 8a, of the heat exchanger 8 is connected, by a second conduit 13, with a dispensing device 10 which delivers the water to the cooking vessel 4. The water coming from the mains water supply F passes into the first conduit 12 and traverses the heat-exchanging means 8 to be introduced into the vessel 4 through the second conduit 13 and the dispensing device 10. The water can be delivered inside the vessel 4 mainly according to two methods that enable considerable energy recovery to be taken advantage of. The first method consists of slowly topping up the water in the vessel 4, which occurs during the cooking step, in order to ensure that water is always present in the vessel 4. The second method consists, on the other hand, of fast topping up until the maximum permitted level in the vessel 4 is reached, to supplement the water absorbed by the pasta in previous cooking.

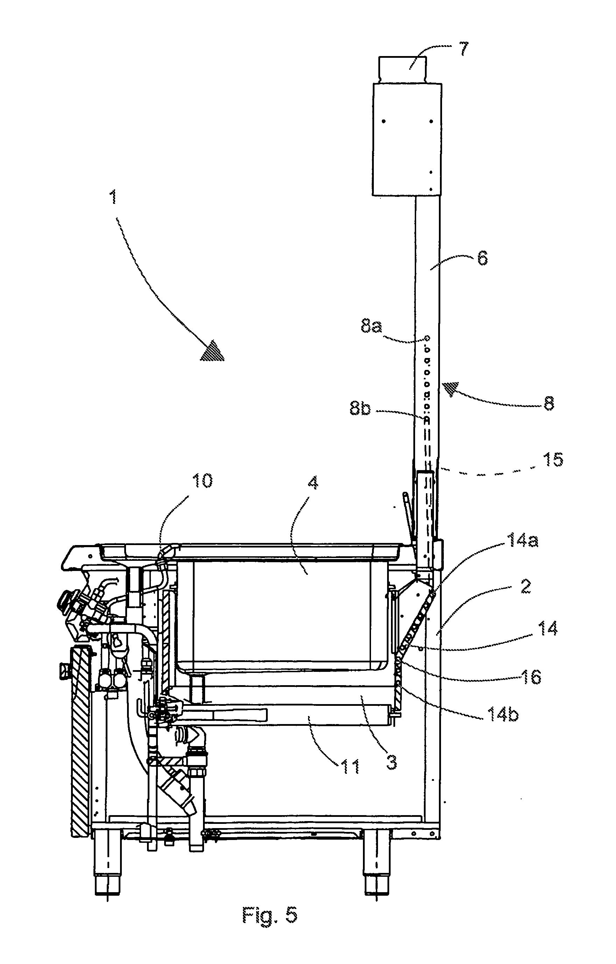

Figure 5 shows a second version of the cooking apparatus 1 illustrated in Figures 1 to 3, in which the apparatus 1 is provided, in addition to the heat-exchanging means 8, with further heat-exchanging means 14 arranged in thermal contact with the external surface of the combustion chamber 3. The further heat-exchanging means 14 has an inlet 14a, that can be connected to a suitable thermal energy accumulating device that, for example, dispenses hot water as needed, for example a boiler, and an outlet 14b connected, by means of a connecting conduit 15, to the inlet 8a, or 8b, of the heat exchanger 8, the outlet 8b, or 8a of which is connected to said boiler. The heat-exchanging means 8 and the further heat-exchanging means 14 are thus serially arranged amongst themselves.

Similarly to the heat exchanger 8, also the heat exchanger 14 may comprise one or more tubular elements 16 with smooth or corrugated pipes.

Further, the heat exchanger 14 can be advantageously provided with insulating means for preventing or limiting the dispersion of heat towards the external environment, said insulating means being arranged so as not to hinder the transfer of heat from the combustion chamber 3 to the operating fluid that circulates in the exchanger 14.

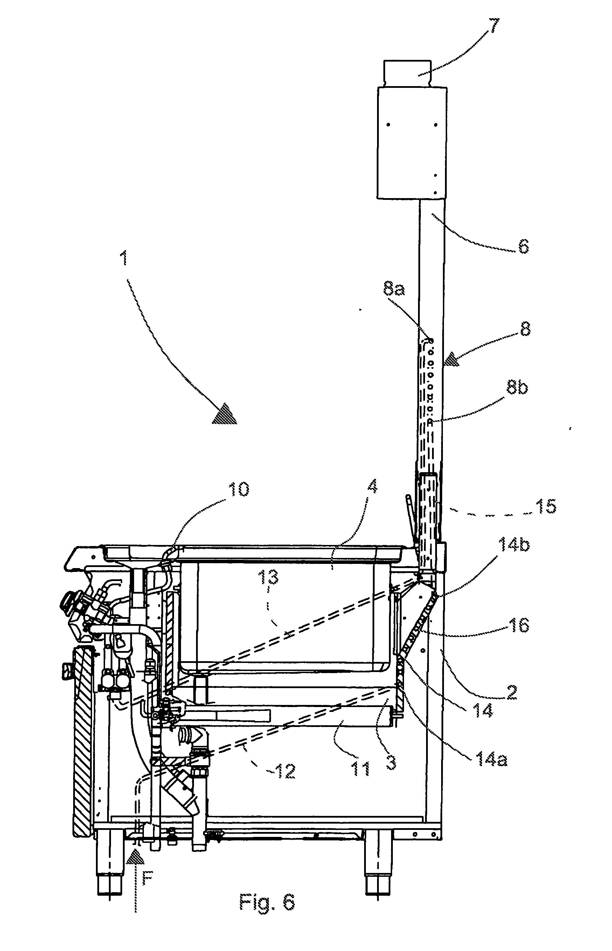

Figure 6 shows a third version of the cooking apparatus 1 illustrated in Figures 1 to 3, similar to the first version illustrated in Figure 4. Also in this third version there is provided further heat-exchanging means 14 arranged in thermal contact with the external surface of the combustion chamber 3. The further heat-exchanging means 14 has an inlet 14a, which can be connected to a mains water supply, indicated schematically by the arrow F, by a first conduit 12, and an outlet 14b connected, by a connecting conduit 15, to the inlet 8a, or 8b, of the heat exchanger 8, the outlet 8b, or 8a of which, is connected by a second conduit 13, to a dispensing device 10 that delivers the water to the cooking vessel 4. The heat-exchanging means 8 and the further heat-exchanging means 14 are thus serially arranged amongst themselves.

Also in this embodiment it is possible to deliver water to the cooking vessel 4 according to the two methods disclosed previously with reference to Figure 4.

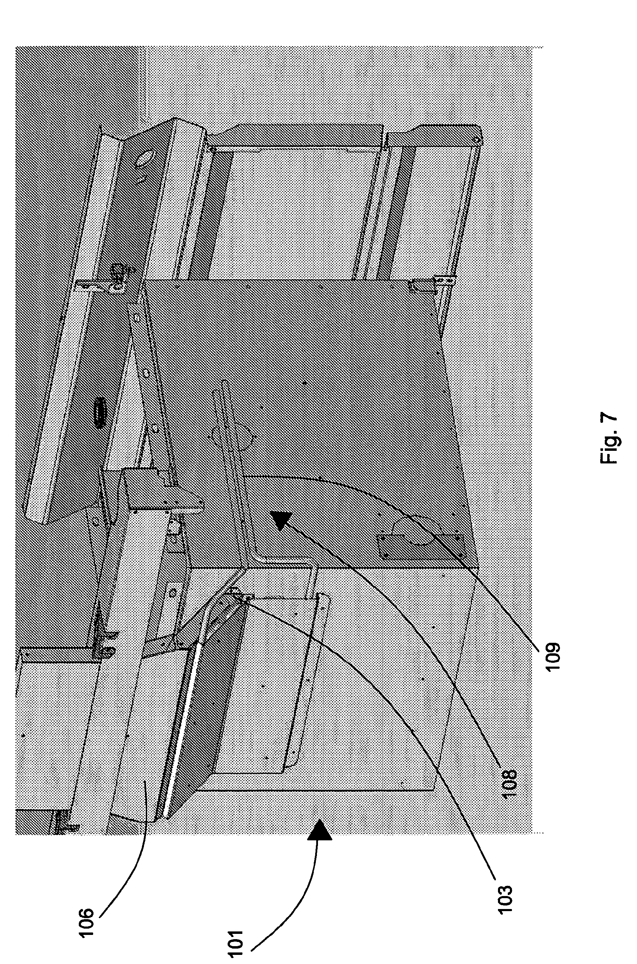

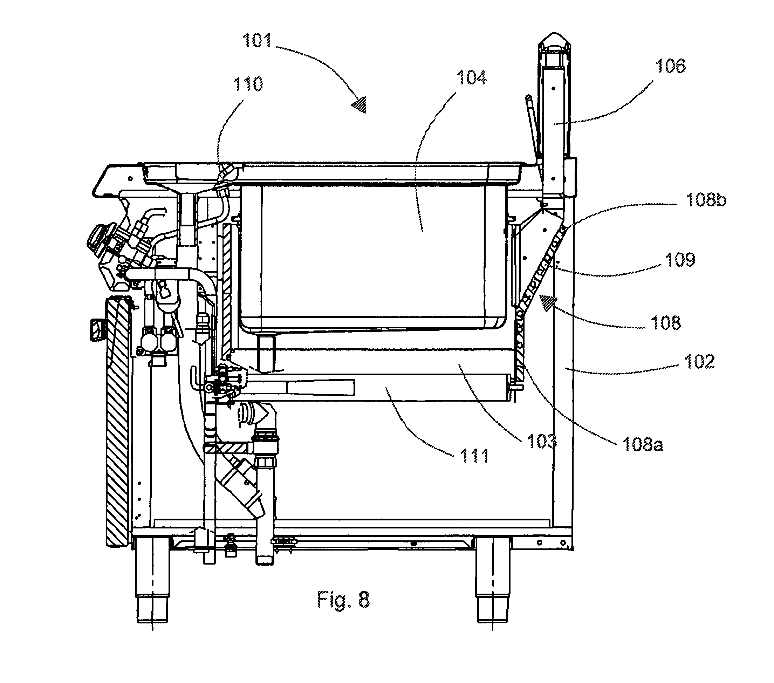

In Figures 7 and 8 there is illustrated a second embodiment of an apparatus 101 according to the invention, that is particularly suitable in the case of apparatuses provided with a flue 106 that is too short to be able to be associated with a heat exchanger.

In this embodiment a heat exchanger 108, in which an operating fluid, for example water or oil is circulated, is positioned in thermal contact with the external walls of the combustion chamber 103, that is inside the body 102 of the apparatus 101, so that the otherwise dispersed heat of the fumes is transferred directly from the combustion chamber 103 to said operating fluid. The heat exchanger 108 is provided with an inlet 108a and with an outlet 108b that is connected to a thermal energy accumulating device, for example a boiler, that dispenses hot water as needed.

Similarly to the heat exchanger 8, also the heat exchanger 108 may comprise one or more tubular elements 109 with smooth or corrugated pipes.

Further, the heat exchanger 108 can be advantageously provided with insulating means for preventing or limiting the dispersion of heat towards the external environment, said insulating means being arranged so as not to hinder the transfer of heat from the combustion chamber 103, to the liquid that circulates in the exchanger 108.

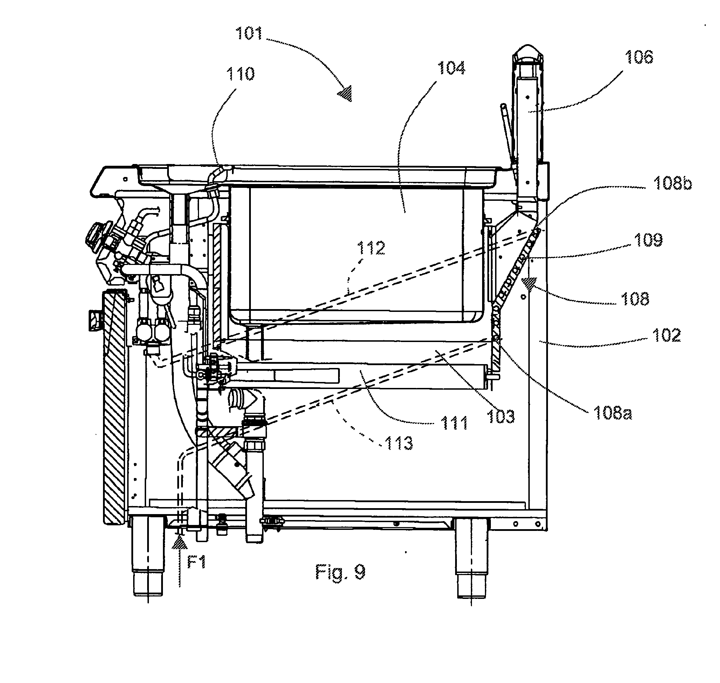

In Figure 9 there is illustrated an example of an apparatus 101, in which the inlet 108a of the heat exchanger 108 is connected, by a first conduit 112, to a mains water supply, indicated schematically by the arrow F1, whilst the outlet 108b of the heat exchanger 108 is connected, by a second conduit 113, to a dispensing device 110 by means of which the water coming from the heat exchanger 108 can be delivered to the vessel 104. Also in this embodiment it is possible to deliver the water to the cooking vessel 104 according to the two methods disclosed previously with reference to Figure 4.

In the practical embodiment, the materials, dimensions and the constructional details may be different from those indicated but be technically equivalent thereto, without thereby falling outside the legal scope of the present invention, which is defined by the appened claims.

## Claims

1. Apparatus (1; 101) for cooking food comprising:
at least a gas burner (11; 111) associated with a combustion chamber (3; 103) in which the combustion of said gas occurs,
containing means (4; 104) containing a food-cooking liquid,
said containing means being in thermal contact with said combustion chamber (3; 103), flue means (6; 106) for evacuating from said combustion chamber (3; 103) fumes produced by the combustion of said gas, heat-exchanging means (8; 108) in which an operating fluid circulates, said heat-exchanging means (8; 108) being suitable for transferring heat from said fumes to said operating fluid, **characterized in that** said heat-exchanging means (8; 108) is connected to a thermal energy accumulating device.

2. Apparatus (101) according to claim 1, wherein said heat exchanging means (108) is associated with said combustion chamber (103).

3. Apparatus (1) according to claim 1, wherein said heat exchanging means (8) is associated with said flue means (6).

4. Apparatus (1) according to claim 3, wherein said operating fluid circulates in said heat-exchanging means (8) in parallel-flow mode with respect to said fumes.

5. Apparatus (1) according to claim 3, wherein said operating fluid circulates in said heat-exchanging means (8) in counterflow mode with respect to said fumes.

6. Apparatus (1) according to any one of claims 3 to 5, wherein said heat-exchanging means (8) is inserted inside said flue means (6).

7. Apparatus (1) according to any one of claims 3 to 6, further comprising further heat-exchanging means (14), serially connected to said heat-exchanging means (8).

8. Apparatus (1) according to claim 7, wherein said further heat-exchanging means (14) is connected to said thermal energy accumulating device.

9. Apparatus (1) according to claim 7, or 8, wherein said further heat-exchanging means (14) is associated with said combustion chamber (3), said further heat-exchanging means (14) being suitable for transferring heat from said combustion chamber (3) to said operating fluid.

10. Apparatus (101) according to claim 2, wherein said heat-exchanging means (108) is provided with insulating means for limiting a transfer of heat to the external environment, said insulating means being arranged so as not to hinder a heat transfer from said combustion chamber (103) to the fluid that circulates in said heat-exchanging means (108).

11. Apparatus (1) according to any one of claims 7 to 9, wherein said further heat-exchanging means (14) are provided with insulating means for preventing or limiting the dispersion of heat towards the external environment, said insulating means being arranged so as not to hinder the transfer of heat from the combustion chamber (3) to the operating fluid that circulates in said further heat-exchanging means (14).

12. Apparatus (1; 101) according to any preceding claim, wherein said heat-exchanging means (8; 108) comprises at least a tubular element (9; 109) inside which there circulates said operating fluid.

13. Apparatus (1) according to any one of claims 7 to 9, or according to claim 11, wherein said further heat-exchanging means (14) comprises at least a tubular element (15) inside which there circulates said operating fluid.

14. Apparatus (1; 101) according to claim 12, or 13, wherein said at least a tubular element (9; 109; 15) is provided with walls with a corrugated surface.

## Patentansprüche

1. Vorrichtung (1; 101) zum Garen von Nahrungsmitteln, die umfasst:
mindestens einen Gasbrenner (11; 111), der zu einer Brennkammer (3; 103) gehört, in der die Verbrennung des Gases stattfindet, eine Aufnahmeeinrichtung (4; 104), die eine Nahrungsmittelgarflüssigkeit enthält,
wobei die Aufnahmeeinrichtung mit der Brennkammer (3; 103) in Wärmekontakt steht, eine Abzugseinrichtung (6; 106) zum Abführen von Dämpfen, die durch die Verbrennung des Gases erzeugt werden, aus der Brennkammer (3; 103), eine Wärmeaustauscheinrichtung (8; 108), in der ein Arbeitsfluid zirkuliert, wobei die Wärmeaustauscheinrichtung (8; 108) zum Übertragen von Wärme von den Dämpfen auf das Arbeitsfluid geeignet ist,
**dadurch gekennzeichnet, dass** die Wärmeaustauscheinrichtung (8; 108) mit einer Wärmeenergiespeichervorrichtung verbunden ist.

2. Vorrichtung (101) nach Anspruch 1, wobei die Wärmeaustauscheinrichtung (108) der Brennkammer (103) zugeordnet ist.

3. Vorrichtung (1) nach Anspruch 1, wobei die Wärmeaustauscheinrichtung (8) der Abzugseinrichtung (6) zugeordnet ist.

4. Vorrichtung (1) nach Anspruch 3, wobei das Arbeitsfluid in der Wärmeaustauscheinrichtung (8) in einem Parallelströmungsmodus in Bezug auf die Dämpfe zirkuliert.

5. Vorrichtung (1) nach Anspruch 3, wobei das Arbeitsfluid in der Wärmeaustauscheinrichtung (8) im Gegenstrommodus in Bezug auf die Dämpfe zirkuliert.

6. Vorrichtung (1) nach einem der Ansprüche 3 bis 5, wobei die Wärmeaustauscheinrichtung (8) in die Abzugseinrichtung (6) eingesetzt ist.

7. Vorrichtung (1) nach einem der Ansprüche 3 bis 6, die ferner eine weitere Wärmeaustauscheinrichtung (14) umfasst, die mit der Wärmeaustauscheinrichtung (8) seriell verbunden ist.

8. Vorrichtung (1) nach Anspruch 7, wobei die weitere
Wärmeaustauscheinrichtung (14) mit der Wärmeenergiespeichervorrichtung verbunden ist.

9. Vorrichtung (1) nach Anspruch 7 oder 8, wobei die weitere Wärmeaustauscheinrichtung (14) der Brennkammer (3) zugeordnet ist, wobei die weitere Wärmeaustauscheinrichtung (14) zum Übertragen von Wärme von der Brennkammer (3) auf das Arbeitsfluid geeignet ist.

10. Vorrichtung (101) nach Anspruch 2, wobei die Wärmeaustauscheinrichtung (108) mit einer Isolationseinrichtung zum Begrenzen einer Übertragung von Wärme auf die Außenumgebung versehen ist, wobei die Isolationseinrichtung so angeordnet ist, dass sie eine Wärmeübertragung von der Brennkammer (103) auf das Fluid, das in der Wärmeaustauscheinrichtung (108) zirkuliert, nicht behindert.

11. Vorrichtung (1) nach einem der Ansprüche 7 bis 9, wobei die weitere Wärmeaustauscheinrichtung (14) mit einer Isolationseinrichtung zum Verhindern oder Begrenzen der Ausbreitung von Wärme zur Außenumgebung versehen ist, wobei die Isolationseinrichtung so angeordnet ist, dass sie die Übertragung von Wärme von der Brennkammer (3) auf das Arbeitsfluid, das in der weiteren Wärmeaustauscheinrichtung (14) zirkuliert, nicht behindert.

12. Vorrichtung (1; 101) nach einem vorangehenden Anspruch, wobei die Wärmeaustauscheinrichtung (8; 108) mindestens ein röhrenförmiges Element (9; 109) umfasst, in dem das Arbeitsfluid zirkuliert.

13. Vorrichtung (1) nach einem der Ansprüche 7 bis 9 oder nach Anspruch 11, wobei die weitere Wärmeaustauscheinrichtung (14) mindestens ein röhrenförmiges Element (15) umfasst, in dem das Arbeitsfluid zirkuliert.

14. Vorrichtung (1; 101) nach Anspruch 12 oder 13, wobei das mindestens eine röhrenförmige Element (9; 109; 15) mit Wänden mit einer gerippten Oberfläche versehen ist.

## Revendications

1. Appareil (1 ; 101) pour la cuisson d'aliments, comprenant :
au moins un brûleur à gaz (11 ; 111) associé à une chambre de combustion (3 ; 103) dans laquelle se produit la combustion dudit gaz, des moyens de contenant (4 ; 104) contenant un liquide de cuisson des aliments, lesdits moyens de contenant étant en contact thermique avec ladite chambre de combustion (3 ; 103), des moyens (6 ; 106) de carneau (ou conduit des fumées) pour évacuer de ladite chambre de combustion (3 ; 103) les fumées produites par la combustion dudit gaz, des moyens (8 ; 108) d'échange de chaleur dans lesquels circule un fluide de service, lesdits moyens d'échange de chaleur (8 ; 108) étant aptes à transférer audit fluide de service de la chaleur provenant desdites fumées, ***caractérisé en ce que*** lesdits moyens d'échange de chaleur (8 ; 108) sont raccordés à un dispositif d'accumulation de l'énergie thermique.

2. Appareil (101) selon la revendication 1, dans lequel lesdits moyens (108) d'échange de chaleur sont associés à ladite chambre de combustion (103).

3. Appareil (1) selon la revendication 1, dans lequel lesdits moyens (8) d'échange de chaleur sont associés auxdits moyens de carneau (6).

4. Appareil (1) selon la revendication 3, dans lequel ledit fluide de service circule dans lesdits moyens (8) d'échange de chaleur en mode à courants parallèles et de même sens par rapport auxdites fumées.

5. Appareil (1) selon la revendication 3, dans lequel ledit fluide de service circule dans lesdits moyens d'échange de chaleur (8) en mode à contre-courant par rapport auxdites fumées.

6. Appareil (1) selon l'une quelconque des revendications 3 à 5, dans lequel lesdits moyens d'échange de chaleur (8) sont insérés à l'intérieur desdits moyens de carneau (6).

7. Appareil (1) selon l'une quelconque des revendications 3 à 6, comprenant en outre des moyens d'échange de chaleur supplémentaires (14), raccordés en série auxdits moyens d'échange de chaleur (8).

8. Appareil (1) selon la revendication 7, dans lequel lesdits moyens d'échange de chaleur supplémentaires (14) sont raccordés audit dispositif d'accumulation de l'énergie thermique.

9. Appareil (1) selon la revendication 7 ou 8, dans lequel lesdits moyens d'échange de chaleur supplémentaires (14) sont associés à ladite chambre de combustion (3), lesdits moyens d'échange de chaleur supplémentaires (14) étant aptes à transférer la chaleur de ladite chambre de combustion (3) audit fluide de service.

10. Appareil (101) selon la revendication 2, dans lequel lesdits moyens d'échange de chaleur (108) sont pourvus de moyens d'isolation destinés à limiter un transfert de chaleur vers l'environnement externe, lesdits moyens d'isolation étant agencés de manière à ne pas faire obstacle à un échange de chaleur de ladite chambre de combustion (103) vers le fluide qui circule dans lesdits moyens d'échange de chaleur (108).

11. Appareil (1) selon l'une quelconque des revendications 7 à 9, dans lequel lesdits moyens d'échange de chaleur supplémentaires (14) sont pourvus de moyens d'isolation destinés à empêcher ou limiter la dispersion de la chaleur vers l'environnement externe, lesdits moyens d'isolation étant agencés de manière à ne pas faire obstacle au transfert de chaleur de la chambre de combustion (3) vers le fluide de service qui circule dans lesdits moyens d'échange de chaleur supplémentaires (14).

12. Appareil (1 ; 101) selon l'une quelconque des revendications précédentes, dans lequel lesdits moyens d'échange de chaleur (8 ; 108) comprennent au moins un élément tubulaire (9 ; 109) à l'intérieur duquel circule ledit fluide de service.

13. Appareil (1) selon l'une quelconque des revendications 7 à 9, ou selon la revendication 11, dans lequel lesdits moyens d'échange de chaleur supplémentaires (14) comprennent au moins un élément tubulaire (15) à l'intérieur duquel circule ledit fluide de service.

14. Appareil (1 ; 101) selon la revendication 12 ou 13, dans lequel ledit au moins un élément tubulaire (9 ; 109; 15) est pourvu de parois avec une surface ondulée.
